# EUROPÄISCHE PATENTANMELDUNG

(11) **EP 1 591 729 A2**
(43) Veröffentlichungstag der Anmeldung: **02.11.2005**
(21) Anmeldenummer: 05008883.0
(22) Anmeldetag: 22.04.2005
(51) Int. Cl.: F24H 8/00

(54) **Wärmetauscher**

(30) Priorität: 27.04.2004 DE 102004020608
(71) Anmelder: BBT Thermotechnik GmbH, 35576 Wetzlar (DE)
(72) Erfinder: Oehler, Heinrich, 35578 Wetzlar (DE)

(57) **Zusammenfassung**

Die Erfindung betrifft einen im Wesentlichen aus einem Gusswerkstoff ausgebildeten Wärmetauscher, insbesondere für einen mit fossilen Brennstoffen befeuerten Brennwertheizkessel, für den Wärmeaustausch zwischen Heizgasen in mindestens einem Heizgaszug und Kesselwasser in mindestens einem Wasserkanal (1).

Es liegt der Erfindung die Aufgabe zugrunde, einen Wärmetauscher, zu schaffen, welcher eine hohe Robustheit besitzt, aber auch möglichst kostengünstig zu fertigen ist.

Gekennzeichnet ist die Erfindung durch eine Werkstoffkombination, nämlich dass heizgasberührte Flächen (4) und/oder Teile aus besonders korrosionsbeständigen Werkstoffen gestaltet sind und nicht heizgasberührte Flächen und/oder Teile aus einem herkömmlichen Gusswerkstoff bestehen. Dazu ist vorgesehen, dass Form- oder Gussteile aus korrosionsbeständigem Stahl als Teilelemente des Wasserkanals (1) wasserdicht in die Wand (2) des aus einem Gusswerkstoff bestehenden Wasserkanals (1) eingegossen sind und/oder zusammen mit der aus einem Gusswerkstoff bestehenden Wand (2) einen Teilbereich der Wand eines Wasserkanals (1) bilden.

## Beschreibung

Die Erfindung betrifft einen Wärmetauscher nach dem Oberbegriff des Patentanspruches 1.

Gattungsgemäße Wärmetauscher aus Grauguss oder Aluminium werden bei Heizkesseln für den Wärmeaustausch zwischen den Heizgasen und dem Kesselwasser eingesetzt. Sie bestehen aus mindestens einem Wasserkanal mit mindestens zwei begrenzenden Wänden, wobei jede Wand eine heizgasberührte sowie eine wasserberührte Wandseite aufweist.

Die DE 41 16 383 C2 zeigt beispielsweise einen Gliederheizkessel mit vertikal ausgerichteten Kesselgliedern, welche eine heizgasberührte Außenseite besitzen und einen mit dem Vorlauf- und Rücklaufanschluss verbundenen Wasserraum einschließen. Auf den heizgasberührten Seiten des Kesselgliedes sind Vorsprünge, insbesondere Rippen oder Noppen, zur Verbesserung der Wärmeübertragung angebracht.

Bei der Konstruktion von Wärmetauschern muss generell der vom eingesetzten Brennstoff abhängige Taupunkt der Heizgase beachtet werden, da die im Heizgas enthaltene Feuchtigkeit kondensiert, sobald dieser unterschritten wird. Bei sogenannten Brennwert-Heizgeräten ist die Kondensation der Heizgase erwünscht, weil die latent im Abgas enthaltene Wärme genutzt werden soll. Daher wird auch meistens Edelstahl als Werkstoff für Heizgaszüge, beispielsweise in Rohr- oder Plattenform, eingesetzt. Dagegen darf bei sogenannten Heizwert-Geräten der Taupunkt nur kurzzeitig unterschritten werden, so dass das Kondenswasser wieder abtrocknen kann. Ansonsten könnten dabei konstruktionsbedingt Korrosionsschäden entstehen, weil in der Regel Gusseisen oder normaler Stahl als Werkstoff verwendet werden. Vorzüge von Gusseisen sind im Wesentlichen Recyclingfähigkeit, Robustheit, relativ niedrige Kosten sowie relativ gute Gestaltungs- und Fertigungsmöglichkeiten.

Der Erfindung liegt daher die Aufgabe zugrunde, einen Wärmetauscher, insbesondere für einen mit fossilen Brennstoffen befeuerten Brennwertheizkessel, zu schaffen, welcher eine hohe Robustheit besitzt, aber auch möglichst kostengünstig zu fertigen ist.

Erfindungsgemäß wird dies mit den Merkmalen des Patentanspruches 1 gelöst. Vorteilhafte Weiterbildungen sind den Unteransprüchen zu entnehmen.

Der Wärmetauscher ist durch eine Werkstoffkombination gekennzeichnet, nämlich dass heizgasberührte Flächen und/oder Teile aus besonders korrosionsbeständigen Werkstoffen gestaltet sind und nicht heizgasberührte Flächen und/oder Teile aus einem herkömmlichen Gusswerkstoff bestehen. Dazu ist vorgesehen, dass Form- oder Gussteile aus korrosionsbeständigem Stahl als Teilelemente des Wasserkanals wasserdicht in die Wand des aus einem Gusswerkstoff bestehenden Wasserkanals eingegossen sind und/oder zusammen mit der aus einem Gusswerkstoff bestehenden Wand einen Teilbereich der Wand eines Wasserkanals bilden.

Die Form- oder Gussteile aus korrosionsbeständigem Stahl können massiv ausgeführt sein und wahlweise an ihrer Oberfläche den Wärmeübergang und/oder die Strömung der Heizgase begünstigende Elemente besitzen. Alternativ oder ergänzend dazu können die Form- oder Gussteile aus korrosionsbeständigem Stahl auch als Wasser führende Hohlkörper, insbesondere als Rohre oder Kanäle, gestaltet sein.

Erfindungsgemäß werden die Form- oder Gussteile aus korrosionsbeständigem Stahl direkt den Heizgasen ausgesetzt und sind im Wesentlichen im Heizgaszug angeordnet. Sie können mit ihren Stirnseiten in die Wand des aus einem Gusswerkstoff bestehenden Wasserkanals eingegossen sein oder auch flächig aufgeschmolzen werden.

Mindestens der mit Temperaturen um den oder unter dem Taupunkt der Heizgase beaufschlagte Bereich eines Heizgaszuges besteht im Wesentlichen aus Form- oder Gussteilen aus korrosionsbeständigem Stahl, um einen ausreichenden Korrosionsschutz zu gewährleisten. Vorzugsweise werden die korrosionsbeständigen Form- oder Gussteile aus Edelstahl gefertigt und in Grauguss als Gusswerkstoff aufgenommen.

Mit dem erfindungsgemäßen Aufbau wird ein Wärmetauscher, insbesondere für einen mit fossilen Brennstoffen befeuerten Brennwertheizkessel, geschaffen, welcher eine hohe Robustheit besitzt, parallel dazu aber auch kostengünstig zu fertigen ist. Alle Vorzüge des Werkstoffes Gusseisen bleiben beim überwiegenden Teil des Wärmetauschers erhalten. Nur die durch Heizgase oder Kondensat belasteten Bereiche werden entsprechend hochwertiger ausgeführt, wodurch auch beispielsweise die Mengen des relativ teuren Werkstoffes Edelstahl in diesen Zonen begrenzt werden.

Vielfältige Gestaltungs- und Fertigungsmöglichkeiten bleiben erhalten, denn die Form- oder Gussteile aus korrosionsbeständigem Stahl werden in eine Gießform eingelegt und verschmelzen dann, wenigstens an den Rändem, beim Gießvorgang mit dem Gusseisen oder sogar mit Aluminium. Neben dem Herstellen derartiger wasserdichter Verbindungen beim Verbundgießen ist auch ein Aufschmelzen von korrosionsbeständigem Stahl auf eine mit Heizgas beaufschlagte Wand eines an sich geschlossenen gusseisernen Körpers denkbar.

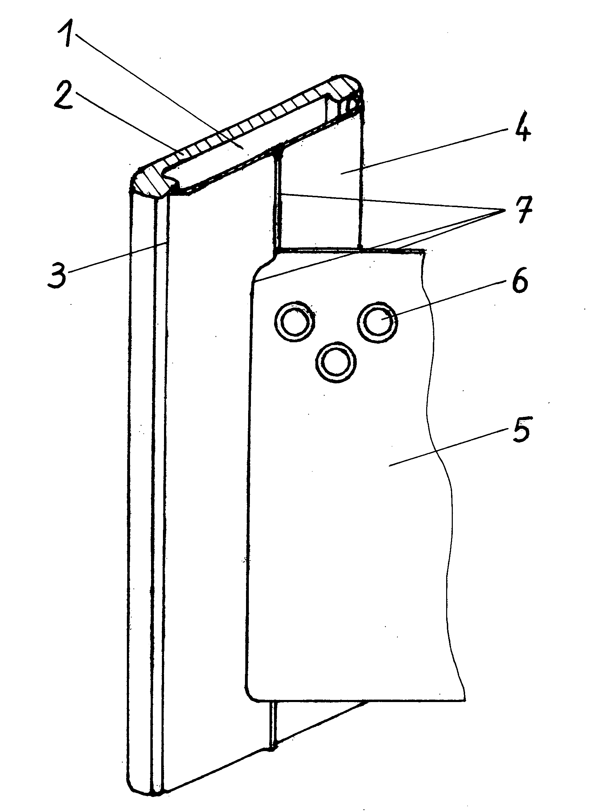

Die Zeichnung stellt ein Ausführungsbeispiel der Erfindung dar und zeigt in einer einzigen Figur ein Segment eines Wärmetauschers in einer perspektivischen Darstellung.

Der Wärmetauscher besitzt einen Wasserkanal 1 mit einer nach außen gerichteten, gusseisemen Wand 2 sowie eine daran an den Nahtstellen 3 angegossene bzw. damit verschmolzene, heizgasberührte Fläche 4 aus korrosionsbeständigem Stahl. Die heizgasberührte Fläche 4 besteht aus zwei geprägten Einzelelementen sowie einem in den Heizgaskanal ragenden Fortsatz 5, welcher mit oberflächenvergrößernden Elementen 6 versehen ist und auch von Wasser durchströmt sein kann. An den Nahtstellen 7 sind die Stahlteile miteinander verschweißt.

## Patentansprüche

1. Wärmetauscher, insbesondere für einen mit fossilen Brennstoffen befeuerten Brennwertheizkessel, für den Wärmeaustausch zwischen Heizgasen in mindestens einem Heizgaszug und Kesselwasser in mindestens einem Wasserkanal, im Wesentlichen aus einem Gusswerkstoff ausgebildet,
**dadurch gekennzeichnet, dass** heizgasberührte Flächen (4) und/oder Teile aus korrosionsbeständigen Werkstoffen und nicht heizgasberührte Flächen und/oder Teile aus einem herkömmlichen Gusswerkstoff bestehen.

2. Wärmetauscher nach Anspruch 1,
**dadurch gekennzeichnet, dass** Form- oder Gussteile aus korrosionsbeständigem Stahl als Teilelemente des Wasserkanals (1) wasserdicht in die Wand (2) des aus einem Gusswerkstoff bestehenden Wasserkanals (1) eingegossen sind und/oder zusammen mit der aus einem Gusswerkstoff bestehenden Wand (2) einen Teilbereich der Wand eines Wasserkanals (1) bilden.

3. Wärmetauscher nach Anspruch 1,
**dadurch gekennzeichnet, dass** die Form- oder Gussteile aus korrosionsbeständigem Stahl massiv ausgeführt sind und wahlweise an ihrer Oberfläche den Wärmeübergang und/oder die Strömung der Heizgase begünstigende Elemente (6) besitzen.

4. Wärmetauscher nach einem der Ansprüche 1 bis 3,
**dadurch gekennzeichnet, dass** die Form- oder Gussteile aus korrosionsbeständigem Stahl als Wasser führende Hohlkörper, insbesondere als Rohre oder Kanäle, ausgeführt sind.

5. Wärmetauscher nach einem der Ansprüche 1 bis 4,
**dadurch gekennzeichnet, dass** die Form- oder Gussteile aus korrosionsbeständigem Stahl direkt den Heizgasen ausgesetzt und im Wesentlichen im Heizgaszug angeordnet sind.

6. Wärmetauscher nach einem der Ansprüche 1 bis 5,
**dadurch gekennzeichnet, dass** die Form- oder Gussteile aus korrosionsbeständigem Stahl mit ihren Stirnseiten in die Wand (2) des aus einem Gusswerkstoff bestehenden Wasserkanals (1) eingegossen und/oder flächig aufgeschmolzen sind.

7. Wärmetauscher nach einem der Ansprüche 1 bis 6,
**dadurch gekennzeichnet, dass** mindestens der mit Temperaturen um den oder unter dem Taupunkt der Heizgase beaufschlagte Bereich eines Heizgaszuges im Wesentlichen aus Form- oder Gussteilen aus korrosionsbeständigem Stahl besteht.

8. Wärmetauscher nach einem der Ansprüche 1 bis 7,
**dadurch gekennzeichnet, dass** die korrosionsbeständigen Form- oder Gussteile vorzugsweise aus Edelstahl gefertigt sind und in Grauguss als Gusswerkstoff aufgenommen werden.
